# EUROPÄISCHE PATENTSCHRIFT

(11) **EP 0 640 901 B1**
(45) Veröffentlichungstag und Bekanntmachung des Hinweises auf die Patenterteilung: **12.03.1997**
(21) Anmeldenummer: 94112538.7
(22) Anmeldetag: 10.08.1994
(51) Int. Cl.: G05B 19/4093, G05B 19/18

(54) **Numerisch gesteuerte Werkzeugmaschine**
Numerically controlled machine tool
Machine-outil à commande numérique

(30) Priorität: 27.08.1993 DE 4328897
(43) Veröffentlichungstag der Anmeldung: 01.03.1995
(73) Patentinhaber: SIEMENS AKTIENGESELLSCHAFT, 80333 München (DE)
(72) Erfinder: Merkl, Klaus, D-91058 Erlangen (DE); Rossi, Gernot, D-91245 Simmelsdorf (DE); Schmitt, Regina, D-91074 Herzogenaurach (DE)

(56) Entgegenhaltungen:
- EP-A- 0 595 154
- WO-A-92/09018
- DE-A- 3 437 340
- DE-A- 4 130 015

## Beschreibung

Die Erfindung betrifft eine Werkzeugmaschinen- oder Robotersteuerung gemäß dem Oberbegriff des Anspruchs 1.

Eine derartige Steuerung ist aus der DE-A-41 30 015 und gleichermaßen aus der WO-A-92/09018 bekannt.

In numerisch gesteuerten Werkzeugmaschinen werden zum Bearbeiten von Werkstücken nicht nur die Maschinenachsen mit dem Werkzeug und dem eingespannten Werkstück bewegt, sondern es werden auch Hilfsfunktionen, wie Werkzeugwechsel oder das Ein- und Abschalten von Kühlflüssigkeit, durchgeführt. Diese Bewegungen und Funktionen sind in einem Bearbeitungsprogramm, bestehend aus einer Folge von Teileprogrammsätzen, gespeichert, die nacheinander abgearbeitet werden.

Aus der deutschen Patentschrift 35 18 300 ist ein Schaltgerät für numerisch gesteuerte Werkzeugmaschinen bekannt, das bei bestimmten Positionen des Werkzeugs ein Signal erhält, nach dessen Empfang eine Meßwertaufnahme oder Meßwertübertragung ausgelöst wird. Hierzu sind keine eigens vorgesehenen Steuerbefehle erforderlich.

Der vorliegenden Erfindung liegt die Aufgabe zugrunde, eine numerisch gesteuerte Werkzeugmaschine zu schaffen, in der bestimmte Aktionen, z. B. Hilfsfunktionen, wie Werkzeugwechsel bei Eintreten bestimmter Ereignisse, unter Verwendung von Steuerbefehlen angestoßen bzw. ausgeführt werden, ohne daß der Programmablauf unnötig verzögert wird.

Erfindungsgemäß wird diese Aufgabe mit den in Anspruch 1 angegebenen Maßnahmen gelöst.

Im Gesamtprogramm gibt es Teileprogrammabschnitte, die außer der Verfahranweisung für die Achsen eine Bedingungsanweisung enthalten. Die darin enthaltene Aktion wird noch während der Ausführung der Bewegungsanweisung gestartet oder ganz ausgeführt. Dadurch wird ein schnellerer Ablauf des Programms erreicht.

Anhand der Zeichnung, in der ein Ausführungsbeispiel der Erfindung als Blockdiagramm dargestellt ist, werden im folgenden die Erfindung sowie Ausgestaltungen und Ergänzungen näher beschrieben und erläutert.

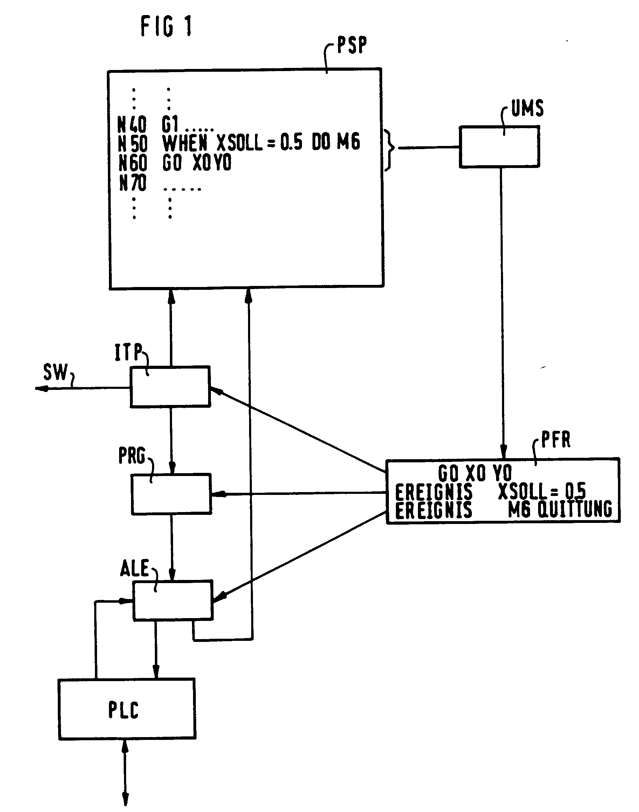

Es zeigen
- Figur 1: ein Beispiel mit einer Bedingung zu einem Bewegungssatz und
- Figur 2: ein Beispiel mit drei Bedingungen zu einem Bewegungssatz.

Die Funktion des Ausführungsbeispiels wird für den Fall eines Werkzeugwechsels erläutert. Für den Werkzeugwechsel wird das Werkzeug in eine Wechselposition gefahren, dort schwenkt ein Werkzeugwechsler auf das Werkzeug, nimmt es auf, und in einem erneuten Schwenkvorgang wird es durch ein neues ersetzt. Dieser Werkzeugwechsel soll möglichst wenig Zeit in Anspruch nehmen. Die Erfindung beruht auf dem Gedanken, daß es für viele Aktionen nicht erforderlich ist, die vorhergehende Aktion völlig abzuschließen, bevor die neue Aktion gestartet werden kann, sondern daß die neue Aktion schon gestartet werden kann, während noch eine andere abläuft. Beim Werkzeugwechsel bedeutet dies, daß das Schwenken des Werkzeugwechslers schon angestoßen werden kann, bevor das Werkzeug in den Werkzeugwechselpunkt gefahren ist. Der Werkzeugwechsler schwenkt bereits, wenn die Achsen das letzte Stück des Weges in die Wechselposition fahren. Die Aufnahme des Werkzeugs kann so gleichzeitig mit dem exakten Einfahren des Werkzeugs in die Werkzeugwechselposition erfolgen. Die Werkzeugwechselzeit wird damit verkürzt.

In der Zeichnung ist mit PSP ein Programmspeicher bezeichnet, in dem als Beispiel zwei den Werkzeugwechsel angebende Sätze N50, N60 eingetragen sind. Der Satz N50 enthält eine Bedingungsanweisung, die besagt, daß, wenn der Sollwert von X = 0,5 ist, die Funktion M6, das ist der Werkzeugwechsel, beginnend mit dem Schwenken des Werkzeugwechslers, ausgeführt werden soll. Der Satz N60 enthält die Anweisung, im Eilgang GO die Werkzeugwechselposition X = 0, Y = 0 anzufahren. Vereinbarungsgemäß werden Bedingungssätze dem folgenden Bewegungssatz zugeschlagen, im Beispiel werden also der Bedingungssatz N50 und der Bewegungssatz N60 zusammengefaßt. Diese werden einem Umsetzer und Interpretierer UMS zugeführt, der daraus drei Einträge bildet, die in einen Puffer PFR eingetragen werden. Im Beispiel steht an erster Stelle die Bewegungsanweisung, an zweiter Stelle die Bedingung, die mit dem Kennzeichen EREIGNIS versehen ist, und an dritter Stelle steht die Anweisung (Aktion), was bei Eintritt der Bedingung zu geschehen hat. Sie ist mit demselben Kennzeichen EREIGNIS wie die Bedingung versehen. Die Bewegungsanweisung wird einem Interpolator ITP zugeführt, der daraus axiale Sollwerte für die Maschine bildet und diese über eine Leitung SW an den Lageregler abgibt. Ferner ermittelt der Interpolator ITP die jeweilige Sollposition der Achsen, im Beispiel nur die der X-Achse, und übergibt sie an eine Prüfeinheit PRG, die sie mit der Bedingung aus dem Puffer PFR vergleicht. Stellt die Prüfeinheit PRG fest, daß die Sollposition der X-Achse gleich 0,5 ist, also die Bedingung erfüllt ist, gibt sie ein Meldesignal an eine Auslöseeinheit ALE, die dann die Anweisung M6 (Werkzeugwechsel) aus der dritten Stelle des Puffers PFR an eine in der Werkzeugmaschinensteuerung enthaltene programmierbare Anpaßsteuerung PLC durchschaltet, von der dann die Steuerbefehle für den Werkzeugwechsel erzeugt werden. Ferner wird an die Einheit PLC eine Quittungsanforderung ausgegeben. Nach Ausführung des Werkzeugwechsels wird daher dieser an die Auslöseeinheit ALE quittiert, worauf diese an den Programmspeicher PSP ein Freigabesignal zur Bearbeitung eines nächsten Satzes N70 abgibt. Der Interpolator ITP gibt ebenfalls ein Freigabesignal ab, wenn die Bewegungsanweisung ausgeführt ist. Da der nächste Satz N70 erst dann bearbeitet werden kann, wenn die Achsen in die Werkzeugwechselposition X = 0, Y = 0 gefahren sind und der Werkzeugwechsel ausgeführt ist, werden die beiden Freigabesignale logisch UND-verknüpft.

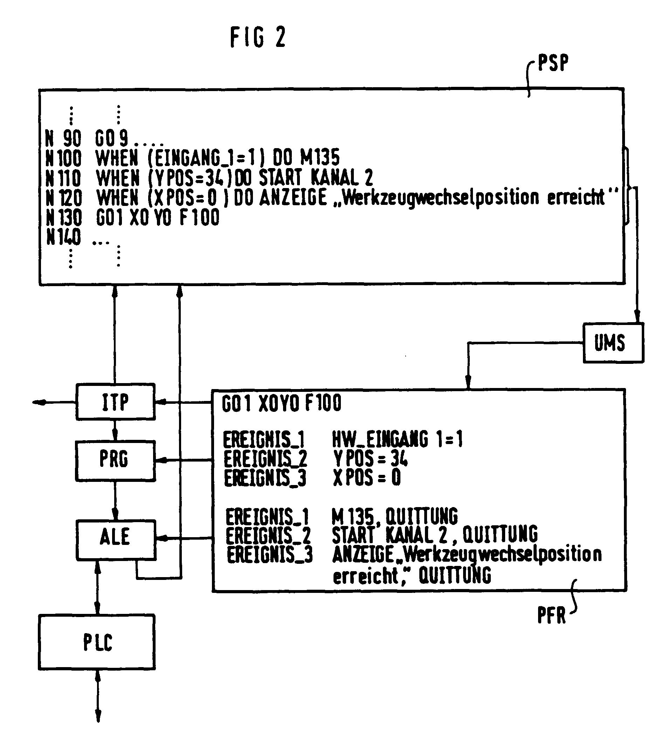

Die Prüfeinheit PRG meldet der Auslöseeinheit ALE den festgestellten Eintritt eines Ereignisses, indem sie die Ereigniskennung, im Beispiel das Wort "EREIGNIS", ausgibt. Es ist daher möglich, gleichzeitig den Eintritt mehrerer Ereignisse zu überwachen und einzeln zu melden. Figur 2 zeigt hierzu ein Beispiel. Auf einen im Programmspeicher PSP gespeicherten Bewegungssatz N90 folgen drei Bedingungssätze N100, N110, N120 und darauf wieder ein Bewegungssatz N130. Wie schon erwähnt, ist vereinbart, daß die Bedingungssätze N100, N110, N120 dem nachfolgenden Bewegungssatz N130 zugeschlagen werden. Mit den vier Sätzen sind folgende Funktionen beschrieben: Während mit der Geschwindigkeit 100 zum Werkzeugwechselpunkt X = 0, Y = 0 gefahren wird, wird die Hilfsfunktion M135 gestartet, wenn am Eingang 1 ein "1"-Signal anliegt, die Kanalkoordinierungsanweisung "Startkanal 2" ausgegeben, wenn die Position Y = 34 erreicht ist, und der Bedien- und Beobachtungseinheit die Anweisung zur Anzeige der Meldung "Werkzeugwechselposition erreicht" gegeben, wenn die Position X = 0 erreicht ist. Die drei Bedingungssätze N100, N110, N120 werden mit dem Bewegungssatz N130 im Umsetzer und Interpretierer UMS zusammengeführt, der in den Puffer PFR drei verschiedene Bedingungen mit den Kennungen EREIGNIS_1, EREIGNIS_2, EREIGNIS_3 und drei Aktionen, ebenfalls mit den Kennungen EREIGNIS_1, EREIGNIS_2, EREIGNIS_3, einträgt. Die Kennungen stellen die jeweilige Beziehung zwischen der Bedingung und der auszuführenden Aktion her. Bedingungen und auszuführende Aktionen sind über die Kennungen EREIGNIS_1, EREIGNIS_2, EREIGNIS_3 einander zugeordnet, die als Meldesignale zwischen den ausführenden Moduln in der Software verwendet werden. Ferner ist im Puffer PFR die Bewegungsanweisung des Bewegungssatzes N130 eingetragen. Diese wird wieder dem Interpolator ITP zugeführt. Die Ereignisse werden in der Prüfeinheit PRG auf Eintritt überwacht, tritt ein Ereignis ein, z. B. ist X = 0, wird dies der Auslöseeinheit ALE mit der Kennung EREIGNIS_3 gemeldet, so daß diese die Anzeige "Werkzeugwechselposition erreicht" anstößt. Die Ausführung jeder Aktion wird quittiert. Sind alle Quittungen in der Auslöseeinheit ALE eingegangen, wird die Bearbeitung des nächsten Satzes N140 freigegeben.

## Patentansprüche

1. Werkzeugmaschinen- oder Robotersteuerung, die von einem aus Sätzen (N40, N50,N60, N70) bestehenden Teileprogramm gesteuert wird, wobei während der Bearbeitung des Teileprogramms in Abhängigkeit einer oder mehrerer vorgegebener Bedingungen eine oder mehrere Aktionen gestartet werden und wobei das Teileprogramm mindestens aus einem Bewegungssatz (N60) und mindestens einem Bedingungssatz (N50) besteht,
**dadurch gekennzeichnet,**
- daß ein Umsetzer (UMS) vorhanden ist, dem der Bewegungssatz (N60) und der mindestens eine Bedingungssatz (N50) zugeführt werden,
- daß der Umsetzer (UMS) die Bewegungsanweisung des Bewegungssatzes (N60) in einen internen Puffer (PFR) einträgt und den mindestens einen Bedingungssatz (N50) in zwei weitere Einträge in dem internen Puffer (PFR) umsetzt, welche die Bedingung und die nach deren Erfüllung auszuführende Aktion enthalten,
- daß vom internen Puffer (PFR) zugeführt werden:
-- die Bewegungsanweisung einem Interpolator (ITP), der daraus Sollwerte für die Steuerung der Bewegung der Maschine bildet,
-- die Bedingung einer Überwachungseinheit (PRG) und
-- die nach Erfüllung der Bedingung auszuführende Aktion einer Auslöseeinheit (ALE) und
- daß die Auslöseeinheit (ALE) von der Überwachungseinheit (PRG) bei Erfüllung der Bedingung ein Meldesignal erhält und daraufhin die auszuführende Aktion auslöst.

2. Werkzeugmaschinen- oder Robotersteuerung nach Anspruch 1,
**dadurch gekennzeichnet,**
- daß das Teileprogramm aus dem Bewegungssatz (N130) und mehreren Bedingungssätzen (N100, N110, N120) besteht,
- daß der Umsetzer (UMS) jeden Bedingungssatz (N100, N110, N120) in jeweils zwei Einträge in dem internen Puffer (PFR) umsetzt,
- daß die Ausführung jeder Aktion an die Auslöseeinheit (ALE) quittiert wird und
- daß, wenn alle auszuführenden Aktionen an die Auslöseeinheit (ALE) quittiert sind, die Bearbeitung des nächsten Programmsatzes (N140) freigegeben wird.

3. Werkzeugmaschinen- oder Robotersteuerung nach Anspruch 1 oder 2, **dadurch gekennzeichnet,** daß die in dem internen Puffer (PFR) eingetragene Bedingung und die nach deren Erfüllung auszuführende Aktion jeweils mit der gleichen Kennung (EREIGNIS, EREIGNIS_1, ...) versehen sind und daß das jeweilige Meldesignal die jeweilige Kennung (EREIGNIS, EREIGNIS_1, ...) ist.

4. Werkzeugmaschinen- oder Robotersteuerung nach einem der Ansprüche 1 bis 3, **dadurch gekennzeichnet,** daß die Bedingungssätze (N50; N100, N110, N120) den zugehörigen Bewegungssätzen (N60; N130) vorangestellt sind.

5. Werkzeugmaschinen- oder Robotersteuerung nach einem der vorhergehenden Ansprüche
- mit einem Werkzeugwechsler, der durch einen Werkzeugwechsel ein auszuwechselndes Werkzeug gegen ein anderes Werkzeug ersetzt, wobei dazu das auszuwechselnde Werkzeug in eine Wechselposition verfahren wird,
**dadurch gekennzeichnet,**
- daß die Bewegungsanweisung das Verfahren des auszuwechselnden Werkzeugs zur Wechselposition ist,
- daß die Aktion der Werkzeugwechsel ist und
- daß die Bedingung ein Erreichen einer vor der Wechselposition liegenden vorgegebenen Sollposition, die das auszuwechselnde Werkzeug während des Verfahrens zur Wechselposition durchfährt, ist, und
- daß dadurch der Werkzeugwechsel gleichzeitig mit dem exakten Einfahren des Werkzeugs in die Wechselposition beginnt.

6. Werkzeugmaschinen- oder Robotersteuerung nach einem der Ansprüche 1 bis 4, **dadurch gekennzeichnet,**
- daß die Bewegungsanweisung als Zielposition eine Wechselposition (X=0, Y=0) und eine Geschwindigkeit, mit welcher die Werkzeug-Wechselposition angefahren wird, enthält, und
- daß einer der Bedingungssätze (N50; N100, N110, N120) als Aktion einen Werkzeugwechsel und als Bedingung das Erreichen einer von der Wechselposition verschiedenen Achsposition (Sollposition) enthält.

## Claims

1. Machine tool or robot control, which is controlled by a part program consisting of records (N40, N50, N60, N70), whereby during the processing of the part program in dependence upon one or more given conditions one or more actions are started and whereby the part program consists at least of a motion record (N60) and at least one condition record (N50),
characterized in that
- a converter (UMS) is present, to which the motion record (N60) and the at least one condition record (N50) are supplied,
- the converter (UMS) enters the motion statement of the motion record (N60) into an internal buffer (PFR) and converts the at least one condition record (N50) into two further entries in the internal buffer (PFR) which contain the condition and the action to be performed after its fulfilment,
- the internal buffer (PFR) supplies:
-- the motion statement to an interpolator (ITP) which forms from this desired values for the control of the movement of the machine,
-- the condition to a monitoring unit (PRG) and
-- the action to be performed after the fulfilment of the condition to a tripping unit (ALE) and
- the tripping unit (ALE) obtains a status signal from the monitoring unit (PRG) upon fulfilment of the condition and thereupon initiates the action to be performed.

2. Machine tool or robot control according to claim 1, characterized in that
- the part program comprises the motion record (N130) and several condition records (N100, N110, N120),
- the converter (UMS) converts each condition record (N100, N110, N120) in each case into two entries in the internal buffer (PFR),
- the performance of each action is acknowledged to the tripping unit (ALE) and
- when all the actions to be performed are acknowledged to the tripping unit (ALE) the processing of the next program record (N140) is enabled.

3. Machine tool or robot control according to claim 1 or 2, characterized in that the condition entered in the internal buffer (PFR) and the action to be performed after its fulfilment are each provided with the same identifier (EVENT, EVENT_1, ...) and in that the respective status signal is the respective identifier (EVENT, EVENT_1, ...).

4. Machine tool or robot control according to one of claims 1 to 3, characterized in that the condition records (N50; N100, N110, N120) are put before the associated motion records (N60; N130).

5. Machine tool or robot control according to one of the preceding claims
- having a tool changer which by means of a tool change replaces a tool to be changed for another tool, whereby to that end the tool to be changed is moved into a change position,
characterized in that
- the motion statement is the movement of the tool to be changed to the change position,
- the action is the tool change and
- the condition is reaching a given desired position lying in front of the change position, with the tool to be changed passing through this desired position during the movement to the change position, and
- in this way the tool change begins at the same time as the exact motion of the tool into the change position.

6. Machine tool or robot control according to one of claims 1 to 4, characterized in that
- the motion statement includes as target position a change position (X=0, Y=0) and a speed at which the tool change position is started, and in that
- one of the condition records (N50; N100, N110, N120) includes as action a tool change and as condition the reaching of an axle position (desired position) different from the change position.

## Revendications

1. Commande de machine-outil ou de robot qui est commandée par un programme de pièce constitué de blocs (N40, N50, N60, N70), une ou plusieurs actions étant commencées pendant le traitement du programme de pièce en fonction d'une ou de plusieurs conditions prescrites et le programme de pièce étant constitué d'au moins un bloc (N60) de déplacement et d'au moins un bloc (N50) de condition, caractérisée en ce que
- il est présent un convertisseur (UMS) auquel sont envoyés le bloc (N60) de déplacement et le au moins un bloc (N50) de condition ,
- le convertisseur (UMS) entre dans une mémoire (PFR) tampon interne l'instruction de déplacement du bloc (N60) de déplacement et transforme le au moins au bloc (N50) de condition en deux autres entrées dans la mémoire (PFR) tampon interne qui contiennent la condition et l'action à exécuter après que la condition aura été satisfaite,
- il est envoyé par la mémoire (PFR) tampon interne:
-- l'instruction de déplacement à un interpolateur (ITP) qui forme à partir de celle-ci des valeurs de consigne pour la commande du déplacement de la machine,
-- la condition à une unité (PRG) de surveillance et
-- l'action à exécuter après que la condition aura été satisfaite à une unité (ALE) de déclenchement et
- l'unité (ALE) de déclenchement reçoit de l'unité (PRG) de surveillance un signal d'avertissement lorsque la condition est satisfaite et déclenche alors l'action à exécuter.

2. Commande de machine-outil ou de robot suivant la revendication 1, caractérisée en ce que
- le programme de pièce est constitué du bloc (N130) de déplacement et de plusieurs blocs (N100, N110, N120) de condition,
- le convertisseur (UMS) convertit chaque bloc (N100, N110, N120) de condition en deux entrées dans la mémoire (PFR) tampon interne,
- il est accusé réception de chaque action auprès de l'unité (ALE) de déclenchement et
- quand il a été accusé réception auprès de l'unité (ALE) de déclenchement de toutes les actions à exécuter, le traitement du bloc (N140) suivant de programme est validé.

3. Commande de machine-outil ou de robot suivant la revendication 1 ou 2, caractérisée en ce que la condition entrée dans la mémoire (PFR) tampon interne et l'action à exécuter après que cette condition aura été satisfaite sont munies de la même caractérisation (EVENEMENT, EVENEMENT_1, ...) et que le signal d'avertissement associé est la caractérisation associée (EVENEMENT, EVENEMENT_1, ...).

4. Commande de machine-outil ou de robot suivant l'une des revendications 1 à 3, caractérisée en ce que les blocs (N50; N100, N110, N120) de condition sont placés devant les blocs (N60; N130) de déplacement associés.

5. Commande de machine-outil ou de robot suivant l'une des revendications précédentes,
comportant un changeur d'outil qui, par un changement d'outil, remplace un outil à changer par un autre outil, l'outil à changer étant à cet effet amené à une position de changement,
caractérisée en ce que,
- l'instruction de déplacement est l'amenée de l'outil à changer à la position de changement,
- l'action est le changement d'outil,
- la condition est d'atteindre une position de consigne prescrite qui se trouve en amont de la position de changement et par laquelle passe l'outil à changer pendant qu'il est amené à la position de changement, et
- le changement d'outil commence en même temps que l'arrivée exacte de l'outil en la position de changement.

6. Commande de machine-outil ou de robot suivant l'une des revendications 1 à 4, caractérisée en ce que
l'instruction de déplacement contient une position de changement (X = 0, Y = 0) comme position de destination et une vitesse à laquelle la position de changement d'outil est atteinte, et
- un des blocs (N50; N100, N110, N120) de condition contient un changement d'outil comme action et, comme condition, le fait d'atteindre une position d'axe (position de consigne) différente de la position de changement.
